(19) Europäisches Patentamt
European Patent Office
Office européen des brevets

(11) Numéro de publication: **0 614 076 B1**

(12) **FASCICULE DE BREVET EUROPEEN**

(45) Date de publication de fascicule du brevet: **26.04.95** (51) Int. Cl.6: **G01M 7/00**

(21) Numéro de dépôt: **94400425.8**

(22) Date de dépôt: **28.02.94**

(54) **Banc de test de vibration pour câble.**

(30) Priorité: **02.03.93 FR 9302367**

(43) Date de publication de la demande:
**07.09.94 Bulletin  94/36**

(45) Mention de la délivrance du brevet:
**26.04.95 Bulletin  95/17**

(84) Etats contractants désignés:
**DE ES GB IT**

(56) Documents cités:
**DE-A- 2 053 657**
**US-A- 3 675 471**

(73) Titulaire: **FRANCE TELECOM**
**6, Place d'Alleray**
**F-75015 Paris (FR)**

(72) Inventeur: **Pecot, Alain**
**Cabinet Ballot-Schmit,**
**7, rue Le Sueur**
**F-75116 Paris (FR)**
Inventeur: **Taupin, Gérard**
**Cabinet Ballot-Schmit,**
**7, rue Le Sueur**
**F-75116 Paris (FR)**
Inventeur: **Mercier, Françis**
**Cabinet Ballot-Schmit,**
**7, rue Le Sueur**
**F-75116 Paris (FR)**

(74) Mandataire: **Schmit, Christian Norbert Marie**
**Cabinet BALLOT-SCHMIT,**
**16, avenue du Pont Royal**
**F-94230 Cachan (FR)**

Rank Xerox (UK) Business Services
(3.10/3.09/3.3.3)

## Description

La présente invention se rapporte aux bancs de test de vibration pour câble et notamment pour câble formant des lignes aériennes de télécommunication.

Avant toute directive d'installation sur un site d'exploitation les nouvelles structures de câble sont testées par des essais de fatigue accélérés sur un banc de vibration pour simuler les contraintes que ces câbles peuvent être amenés à subir après leur installation.

Ces essais sont systématiquement dans les procédures d'agrément dans le cas de câbles de télécommunication afin que soit écartée toute structure de câble et de matériel d'accrochage inadaptée aux conditions d'exploitation.

Le principe du banc d'essai consiste donc à soumettre le câble à une oscillation lancée puis entretenue par le banc d'essai sur un mode de vibration pouvant être choisi entre le mode 1 et le mode 10 dans le cas des câbles de télécommunication. On rappelle à ce propos que le mode de vibration est un mouvement d'amplitude obtenu par résonance du câble. On rappelle également que pour un câble, la pulsation propre du câble, c'est-à-dire encore la valeur de la pulsation de la vibration de résonance du câble est donnée par la formule suivante :

$$\varpi_n^2 = (\frac{n\pi}{L})^2 \, \frac{T}{m} \left[ 1 + (\frac{n\pi}{L})^2 \, \frac{EI}{T} \right] \qquad (1)$$

avec

| | |
|---|---|
| $\omega$ | = pulsation propre du câble |
| L | = longueur du câble |
| m | = masse linéaire |
| n | = numéro du mode |
| E | = module d'Young |
| I | = moment d'inertie du câble |
| EI | = raideur du câble |

qui de façon plus simplifiée peut se traduire par la formule suivante :

$$\text{fréquence propre du câble} = Fn = \frac{n}{2L} \sqrt{\frac{Tps}{m}} \qquad (2)$$

où Tps est la tension de pose du câble.

Cette valeur de tension est calculée au préalable à partir d'une valeur de flèche du câble que l'on se fixe et qui, à titre d'exemple pour des câbles de télécommunication, est égale à 0,42 mètres à 15°. Si F est la flèche choisie, la valeur de la tension maximale est obtenue par la formule suivante :

$$Tps = pL^2/8 \times F \qquad (3)$$

Les bancs de test de vibration connus à ce jour comme dans DE-A-2 053 657 comprennent un dispositif d'entraînement se composant d'un moteur à courant continu dont la vitesse est réglée par un opérateur et varie dans une plage de plus ou moins 10% par rapport à la vitesse correspondant aux modes de vibrations choisis pour l'essai. Cette vitesse est déterminée par contrôle visuel de l'opérateur. L'opérateur est sensé détecter le moment ou le câble entre dans le mode de vibration choisi lors du balayage manuel de la gamme de vitesse du moteur.

Le moteur à courant continu entraîne un système bielle manivelle produisant un mouvement alternatif dans le plan vertical d'amplitude fixe sur le câble. Le câble est fixé sur la bielle par un système de mâchoire. Le câble est tendu manuellement à l'aide d'un tire-fort et d'un dynamomètre de contrôle de la tension de pose.

On s'est aperçu qu'avec un tel système un certain nombre d'inconvénients apparaissaient lors des essais. On s'est aperçu en effet que lors de ces essais qui sont généralement assez longs, de l'ordre d'une centaine d'heures, les vibrations auxquelles était soumis le câble ne correspondaient plus aux modes de vibrations choisis. On s'est aperçu en effet qu'il n'était pas rare que bien que sollicité à la fréquence propre calculée, ce câble ne vibre pas dans le mode de vibration choisi.

2

On s'est aperçu aussi que de nombreuses ruptures du câble se produisaient et que cela pouvait arriver dès le début de l'essai, la rupture ayant lieu au point de fixation du câble au dispositif d'entraînement.

La présente invention permet de résoudre ces problèmes.

La présente invention a plus particulièrement pour objet un banc de test en vibration pour câble principalement caractérisé en ce qu'il comporte des moyens de maintien de l'effort de traction sur le câble constant pendant la durée déterminée de l'essai en vibration afin d'entretenir le mode de vibration choisi.

Les moyens de maintien de l'effort de traction constant comportent pour cela des moyens de mesure et de régulation de cet effort permettant de corriger automatiquement les écarts apparaissant par rapport à une valeur de tension prédéterminée à maintenir.

Selon une autre caractéristique de l'invention le banc de test comporte un dispositif d'entraînement du câble, le câble étant tendu entre ce dispositif et une attache fixe, les moyens de mesure et de régulation comprenant un capteur de force mesurant la traction exercée sur le câble par l'intermédiaire d'un filin accroché au câble, des moyens de commande et des moyens de déplacement du dispositif d'entraînement, les moyens de commande étant aptes à provoquer des déplacements du dispositif d'entraînement afin d'obtenir un réglage de la tension exercée, à la valeur prédéterminée.

Selon une autre caractéristique de l'invention les moyens de déplacement comportent des glissières sur lesquelles est placé le dispositif d'entraînement, un motoréducteur couplé à une vis provoquant un déplacement du dispositif d'entraînement sur les glissières conformément à une consigne reçue des moyens de commande.

Selon une autre caractéristique de l'invention le câble est relié au dispositif d'entraînement par un bras oscillant mu par le dispositif.

La liaison entre le câble et le bras oscillant est réalisée au moyen d'un filin en acier, le câble étant fixé à ces filins en bout du bras oscillant par l'intermédiaire d'une pince à serrage conique.

Selon une autre caractéristique de l'invention le dispositif d'entraînement comporte un système électropneumatique comprenant une tête articulée apte à mouvoir le bras dans n'importe quel plan d'oscillation désiré.

Selon une autre caractéristique de l'invention le système électropneumatique comporte un arbre support de la tête articulée, couplé à des moyens d'entraînement en rotation de cet arbre.

Selon une autre caractéristique de l'invention, la tête articulée comprend deux vérins et un distributeur proportionnel permettant de mettre en mouvement alternatif les deux vérins, ces vérins étant fixés à une première plaque supportant le bras oscillant qui lui-même est monté sur la tête articulée.

Selon une autre caractéristique de l'invention les moyens d'entraînement en rotation comportent un motoréducteur entraînant le bras support par l'intermédiaire d'une poulie et d'une courroie de transmission.

Les moyens de commande comportent une commande électropneumatique pilotant le dispositif d'entraînement, un organe de pilotage automatique de cette commande électropneumatique comportant une unité de traitement chargée d'un programme d'essai et un périphérique d'entrée/sortie pour recevoir les caractéristiques intrinsèques du câble et les caractéristiques relatives à l'essai.

Selon un autre aspect de l'invention les moyens de traitement chargés du programme d'essai permettent sur réception des caractéristiques intrinsèques du câble et des caractéristiques relatives à l'essai de procéder à une étape préliminaire consistant à :

- calculer la fréquence propre du câble pour un mode de vibration choisi, et une valeur de tension du câble prédéterminée;
- positionner le dispositif d'entraînement à un emplacement prédéterminé sur les glissières pour soumettre le câble à la tension prédéterminée;
- envoyer un signal de commande à la commande électropneumatique pour solliciter le câble à la fréquence de vibration propre calculée et à faire évoluer le signal de commande de manière à ce que la fréquence de vibration évolue par pas progressif autour de la fréquence propre calculée jusqu'à obtention de la fréquence réelle du câble.

Selon un autre aspect de l'invention les moyens de traitement chargés du programme d'essai sent aptes à déterminer la fréquence propre réelle du câble par mesure durant l'étape préliminaire de la tension dynamique du câble et recherche parmi les valeurs mesurées de la valeur maximum, la fréquence propre réelle du câble étant obtenue pour cette valeur de tension dynamique maximum.

Selon une autre caractéristique de l'invention les moyens de traitement chargés du programme d'essai envoient un signal de commande à la commande électropneumatique de manière à ce que le système électropneumatique sollicite le câble à des vibrations correspondant à la fréquence propre réelle qui a été déterminée lors de la phase préliminaire.

D'autres particularités et avantages de l'invention apparaîtront clairement la lecture de la description qui est faite ci-après à titre d'exemple non limitatif et en regard des dessins sur lesquels :

3

- la figure 1 représente une vue d'ensemble d'un banc de test de vibration pour des câbles de télécommunication,
- la figure 2 représente un schéma plus détaillé du banc de test en vibration selon l'invention,
- la figure 3 représente une vue de la tête articulée et du bras oscillant suivant un plan perpendiculaire au plan du schéma de la figure 2,
- la figure 4 représente un schéma illustrant l'accrochage du câble au bras oscillant,
- les figures 5 et 6 représentent les différentes étapes mises en oeuvre pour le test en vibration conformément à l'invention.

Pour réaliser un test en vibration sur un câble d'une longueur L on déroule ce câble sur toute sa longueur. On l'accroche par une extrémité P1 à une borne fixe 60 qui reconfigure un accrochage du câble sur un poteau en bout de ligne aérienne et par l'autre extrémité P2 au dispositif d'entraînement 40.

Pour l'essai en vibration on utilise une potence intermédiaire 80 qui permet de tenir ce câble en un point P3 soit environ à mi-portée, le câble étant alors accroché par une pince de suspension 81 qui va laisser se propager la vibration jusqu'au point d'attache fixe 60. La potence 80 représente un accrochage du câble sur un appui intermédiaire de la ligne aérienne. On choisit bien entendu pour l'emplacement de la pince, un noeud de vibration afin de ne pas introduire de contraintes nuisibles à la vibration qui est entretenue. La pince peut être une pince d'arrêt et dans ce cas les vibrations seront arrêtées à l'emplacement de cette pince, la portée des vibrations étant alors réduite à la longueur du câble prise entre le point d'attache P2 du dispositif d'entraînement et cette pince d'arrêt placée au point P3.

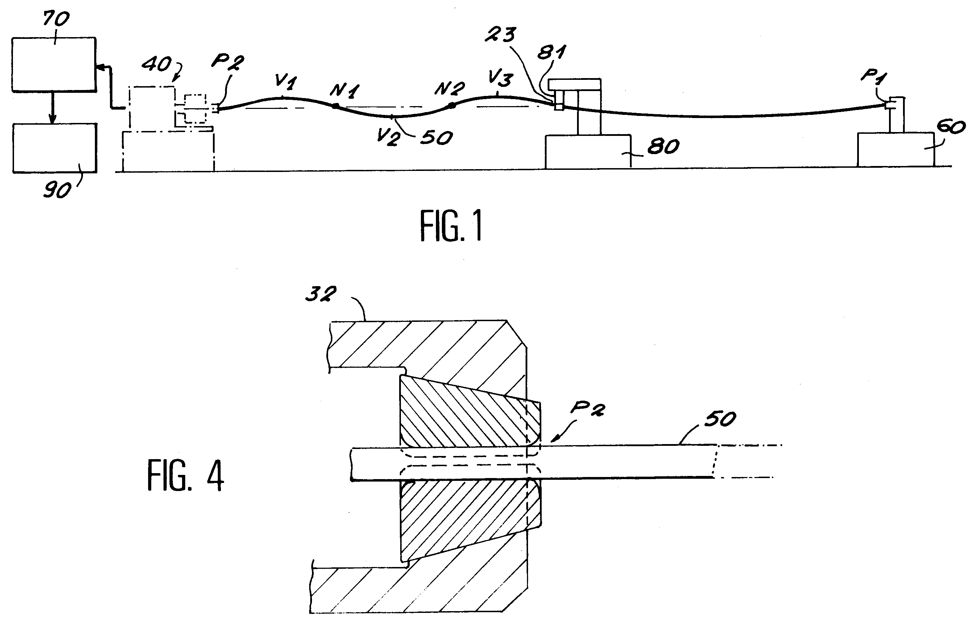

La figure 1 permet d'illustrer un exemple de câble 50 vibrant selon le mode 3 sur une portée de vibrations de 40 mètres. On rappelle que lorsque le mode de vibration est 3 le câble présente trois ventres V1, V2, V3 et deux noeuds N1, N2 tels que représentés sur cette figure 1.

Le mode 3 est le mode couramment utilisé pour tester les câbles en vibration, de télécommunication.

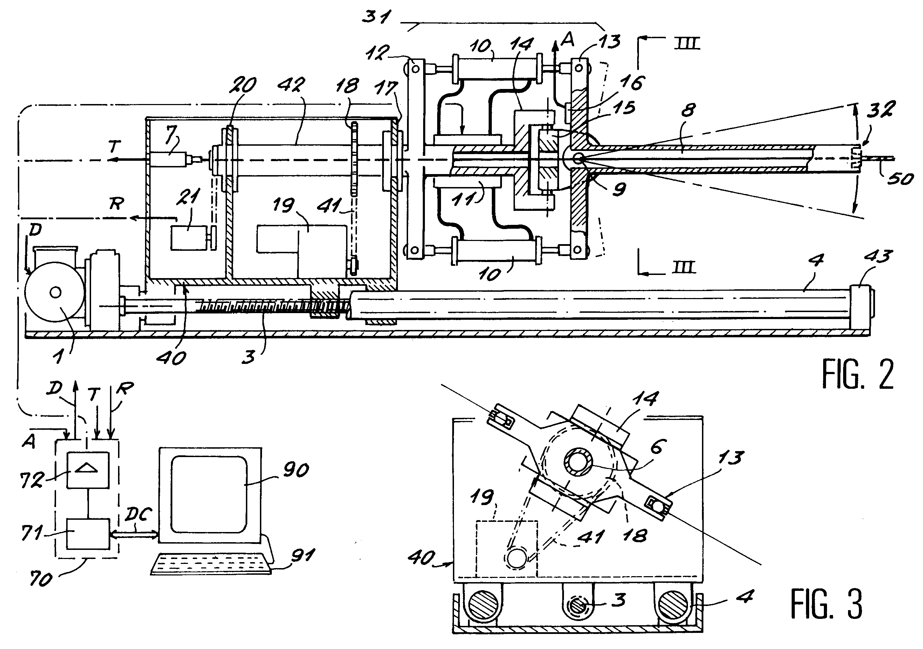

On a représenté sur la figure 2 le banc de test en vibration selon l'invention. Ce banc de test comporte une partie réalisant la fonction mécanique permettant d'obtenir les vibrations du câble et une partie électronique permettant de piloter le dispositif d'entraînement de façon automatique.

La partie mécanique du banc de test comporte les éléments suivants :
- à un système électropneumatique comprenant un bras oscillant 8 fixé sur une tête articulée 31 portée par un arbre support 42. L'arbre support 42 est couplé à un motoréducteur 19 par l'intermédiaire d'une poulie 18 et d'une courroie de transmission 41 qui permettent de l'entraîner en rotation de manière à faire pivoter la tête 31 d'un angle désiré. Ainsi, le bras oscillant 8 peut être en mouvement suivant un plan d'excitation variable en fonction de l'angle de rotation de la tête.

L'arbre support 42 et le dispositif d'entraînement en rotation de cet arbre sont logés dans un caisson mobile 40. En effet ce caisson peut se déplacer sur des glissières 4 de longueur prédéterminée sous l'action d'une vis 3 entraîné par un motoréducteur 1. On choisit un motoréducteur ayant une puissance telle que l'on puisse exercer un effort de traction de valeur maximum désirée sur le câble. Dans l'exemple de tests qui ont été réalisés cette valeur peut atteindre 1000 daN.

Le caisson 40 abrite également des capteurs de mesure de paramètres de l'essai. En effet le dispositif d'entraînement comportent en outre un capteur 21 couplé à l'arbre support 42 pour mesurer l'angle de rotation de la tête 31 et donc l'angle du plan de vibration. Le dispositif comporte également un capteur de force 7 pour mesurer l'effort de traction exercé sur le câble, un filin en acier 6 étant prévu pour assurer la liaison entre le capteur de force et le câble.

La tête articulée 31 comporte, selon l'exemple qui est donné, deux vérins pneumatiques 10 reliés à un distributeur proportionnel 11. Les vérins pneumatiques sont mis en mouvement alternatif ce qui permet de faire osciller le bras 8 dans un plan de vibration donné par l'inclinaison de la tête articulée 31.

Ces deux vérins sont fixés sur une plaque arrière 12 de la tête 31, constituant un appui pour ces vérins. Les vérins sont en outre reliés mécaniquement à une plaque avant 13 qui supporte le bras oscillant 8. Cette plaque 13 est articulée. Les chapes 14 et 15 permettent l'articulation du bras oscillant suivant des axes perpendiculaires. Le bras 8 et son support ainsi que les deux chapes 14 et 15 sont reliés mécaniquement entre eux par un système de cardan 9.

Un capteur 16 de mesure de l'amplitude du bras oscillant est fixé sur la plaque 13. La mesure de cette amplitude permet au système de commande de connaître le mouvement réel de bras et dans le cas ou l'amplitude mesurée ne correspond pas au paramètre amplitude rentré dans le système, de réaliser une régulation de l'amplitude pour le mode de vibration choisi.

L'arbre 42 support de la tête oscillante 31 repose sur un palier avant 17 et sur un palier arrière 20.

Les commandes électropneumatiques du caisson 40 et de la tête articulée 31 sont obtenus au moyen d'un coffret de commande 70 piloté par des moyens de traitement et de commande 90.

Le coffret de commande 70 comporte des moyens de commande pneumatiques agissant par l'intermédiaire de circuit pneumatique classiques sur les deux vérins de la tête articulée. Ce coffret est également apte à générer tous les signaux électriques de commande des différents éléments à commande électrique du caisson et de la tête articulée. Ces éléments, c'est à dire les capteurs et les motoréducteurs sont pour cela reliés électriquement au coffret. Le coffret est apte en fonction des signaux de commande qu'il reçoit du système 90, de générer des signaux de consigne correspondants à partir du générateur 71 et de réaliser une adaptation de niveaux à partir d'un générateur 72 pour appliquer des signaux de niveau requis aux différents éléments concernés dans le caisson ou sur la tête articulée.

On a symbolisé les commandes des pneumatiques par des traits d'axe. Les signaux A, T, R, sont des signaux électriques que reçoit le coffret en provenance des différents capteurs qui les transmet par une liaison bidirectionnelle L au système de traitement 90. Le signal de consigne D permet d'obtenir les déplacements du caisson 40.

Le système de traitement et de commande comporte une unité de traitement 90 chargée d'un programme d'essai, et un périphérique d'entrée-sortie formé d'un clavier 91 pour rentrer les paramètres intrinsèques du câble.

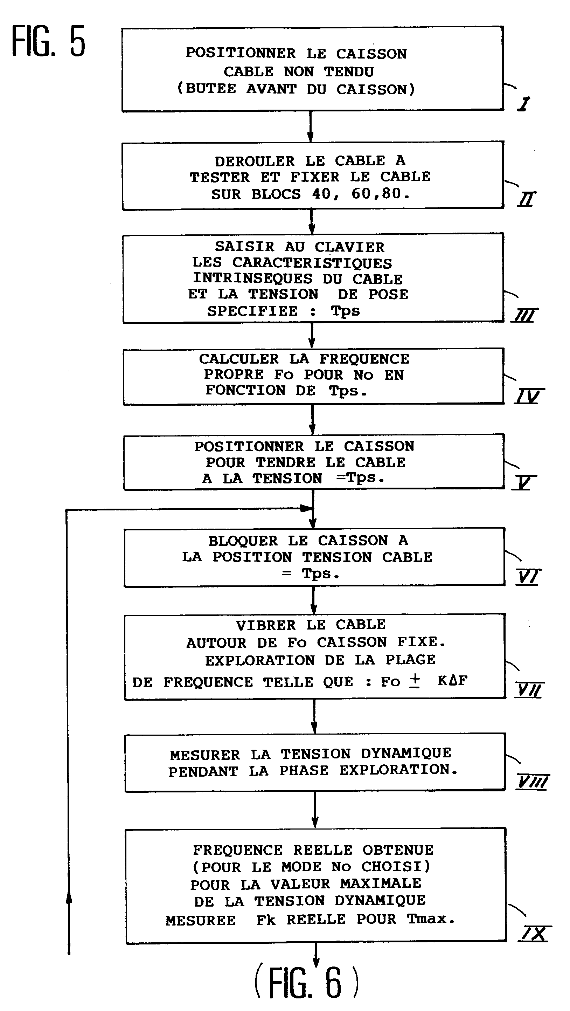

La figure 3 illustre le système d'entraînement vue en coupe suivant un plan perpendiculaire au plan de la figure 2.

La figure 4 illustre l'attache du câble au bras 8. Le câble 50 est attaché au bras oscillant au moyen d'une pince à serrage conique 32 et un filin d'acier 6.

La figure 5 illustre les étapes mises en oeuvre par les moyens de commande automatiques pour réaliser un essai de test en vibration. Pour cela l'unité de traitement 90 chargée du programme d'essai permet lors d'une étape préliminaire dès que les paramètres du câble sont chargés de déterminer la fréquence propre réelle du câble.

L'unité de commande permet alors par une commande appropriée via le coffret de commande électropneumatique d'entretenir le système à cette fréquence et de réaliser un contrôle automatique de la valeur de la tension du câble et une régulation de cette valeur à la valeur spécifiée Tps.

On procède pour cela au préalable à quelques réglages manuels consistant à "poser" le câble pour le test blocs (I à III figure 5. En effet, pour cela, on positionne le caisson en butée avant, le câble étant non tendu. On déroule le câble à tester et on fixe ce câble sur les blocs 40, 60, 80. On saisit au clavier les caractéristiques intrinsèques du câble et de la tension de pose spécifiée Tps.

On procède ensuite de façon automatique au déroulement des étapes mises en oeuvre conformément au procédé par les moyens de commandes.

Dans ce déroulement une phase préliminaire consiste à déterminer la fréquence propre du câble pour la tension de pose Tps et à rechercher autour de cette fréquence, la fréquence propre réelle.

Lorsque la fréquence propre réelle a été évaluée le procédé consiste ensuite à maintenir la tension de pose Tps et à lancer la vibration à une fréquence fr égale à la fréquence propre réelle.

De façon plus précise, la phase préliminaire (cf. blocs IV à IX figure 5) consiste à :
- calculer la fréquence propre fo pour no en fonction de la tension Tps (formule 2),
- bloquer le caisson à la position permettant de soumettre le câble à la tension Tps,
- à faire vibrer le câble autour de fo, le caisson restant en position fixe et à effectuer une exploration d'une plage de fréquence fo ± k f par pas progressifs f,
- mesurer la tension dynamique du câble avec la jauge de force 7 pendant cette phase d'exploration en fréquence,
- déterminer la fréquence propre réelle fk réelle du câble pour le mode no choisi, cette fréquence étant obtenue lorsque la valeur de la tension dynamique du câble est maximum c'est à dire pour la tension Tmax mesurée pendant l'exploration.

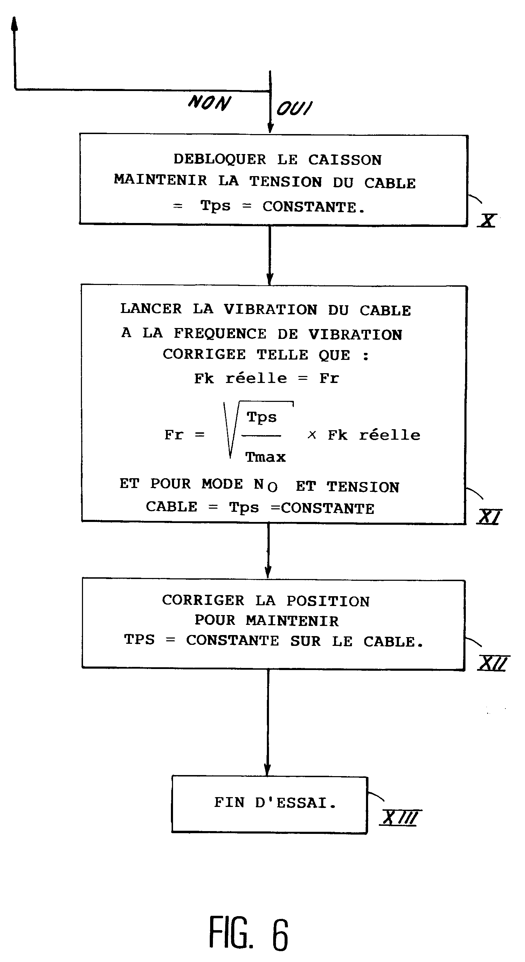

Le procédé consiste ensuite, lorsque cette recherche de fréquence propre réelle est terminée (cf figure 6, blocs X à XIII) à :
- débloquer le caisson, maintenir la tension du câble à Tps (par des commandes de déplacement D du caisson pour obtenir une tension constante ayant cette valeur Tps),
- lancer la vibration du câble à la fréquence de vibration corrigée fr où

$$fr = \sqrt{\frac{Tps}{Tmax}} \cdot fk \text{ réelle}$$

et pour le mode choisi no et la tension du câble Tps constante,

5

- corriger la position du caisson pour maintenir le câble à une tension constante égale à Tps.

Bien entendu le test peut être poursuivi pour d'autres modes de vibration que celui qui a été choisi au démarrage.

**Revendications**

1. Banc de test en vibration pour câble permettant de soumettre un câble à des essais en vibration à une fréquence prédéterminée et selon un ou plusieurs modes de vibrations choisis; caractérisé en ce que le banc de test comporte des moyens de maintien (2,70,20) de l'effort de traction sur le câble constant pendant la durée de l'essai en vibration afin d'entretenir le mode de vibration choisi.

2. Banc de test en vibration selon la revendication 1, caractérisé en ce que les moyens de maintien comportent des moyens de mesure et de régulation (7, 1, 3, 4) de l'effort de traction soumis au câble afin de corriger les écarts entre cet effort de traction et une valeur de tension prédéterminée à maintenir.

3. Banc de test en vibration selon la revendication 2, comprenant un dispositif d'entraînement du câble (37), le câble étant tendu entre ce dispositif et une attache fixe (81), caractérisé en ce que les moyens de mesure et de régulation comportent un capteur de force (7) mesurant la traction exercée sur le câble par l'intermédiaire d'un filin (6) accroché au câble, des moyens de commande (90, 70) et des moyens de déplacement (40, 1, 3, 4) du dispositif d'entraînement, les moyens de commande étant aptes à provoquer des déplacements des dispositifs d'entraînement afin d'obtenir un réglage la tension exercée à la valeur prédéterminée.

4. Banc de test en vibration selon la revendication 3, caractérisé en ce que les moyens de déplacement comportent des glissières (4) sur lesquelles est placé le dispositif d'entraînement, un moto réducteur (1) couplé à une vis (3) provoquant le déplacement du dispositif d'entraînement sur ces glissières conformément à une consigne reçue des moyens de commande.

5. Banc de test en vibration selon l'une quelconque des revendications précédentes, caractérisé en ce que le câble est relié au dispositif d'entraînement par l'intermédiaire d'un bras oscillant (8) mu par le dispositif.

6. Banc de test selon la revendication 5, caractérisé en ce que la liaison entre le câble et le bras est réalisée par une pince conique (32) placée sur un noeud de vibration du câble.

7. Banc de test en vibration selon la revendication 5, caractérisé en ce que le dispositif d'entraînement comporte un système électropneumatique comprenant une tête articulée (31) apte à mouvoir le bras dans n'importe quel plan d'oscillation désire.

8. Banc de test en vibration selon la revendication 7, caractérisé en ce que le système électropneumatique comporte un arbre support (42) de la tête articulée (31) couplé à des moyens d'entraînement en rotation (19) de cet arbre.

9. Banc de test en vibration selon la revendication 7 ou 8, caractérisé en ce que la tête articulée (31) comporte deux vérins (10) et un distributeur proportionnel (11) permettant de mettre en mouvement alternatif les deux vérins, ces vérins étant fixés à une première plaque supportant le bras oscillant qui lui même est monté sur la tête articulée.

10. Banc de test en vibration selon la revendication 8, caractérisé en ce que les moyens d'entraînement en rotation (19) comportent un motoréducteur (19) entraînant le bras support par l'intermédiaire d'une poulie (18) et d'une courroie de transmission (41).

11. Banc de test en vibration selon l'une quelconque des revendications précédentes, caractérisé en ce que les moyens de commande comportent une commande électropneumatique (70) pilotant le dispositif d'entraînement du bras oscillant, un organe de pilotage automatique (90) de cette commande électropneumatique comportant une unité de traitement chargée d'un programme d'essai, l'unité étant munie d'un périphérique d'entrée/sortie (21) pour recevoir les caractéristiques intrinsèques du câble et les caractéristiques relatives à l'essai.

12. Banc de test selon la revendication 11, caractérisé en ce que les moyens de traitement chargés du programme d'essai permettent sur réception des caractéristiques intrinsèques du câble et des caractéristiques relatives à l'essai de procéder à une étape préliminaire consistant à :
   - calculer la fréquence propre du câble pour le mode de vibration choisi en fonction d'une valeur de tension spécifiée Tps,
   - positionner le dispositif d'entraînement à un emplacement prédéterminé sur les glissières pour soumettre le câble à la tension spécifiée,
   - envoyer un signal de commande à la commande électropneumatique pour solliciter le câble à la fréquence de vibration propre calculée et à faire évoluer le signal de commande de manière à ce que la fréquence de vibration évolue par pas progressif autour de la fréquence propre calculée jusqu'à obtention de la fréquence propre réelle fk réelle du câble, cette fréquence étant obtenue pour une tension dynamique Tmax.

13. Banc de test en vibration selon la revendication 12, caractérisé en ce que les moyens de traitement chargés du programme d'essai sont aptes à déterminer la fréquence propre réelle par mesure durant l'étape préliminaire de la tension dynamique du câble et recherche parmi les valeurs mesurées de la valeur maximum, la fréquence propre réelle du câble étant obtenue lorsqu'il y a égalité entre ces deux valeurs de tension.

14. Banc de test en vibration selon les revendications 12 ou 13, caractérisé en ce que les moyens de traitement chargés du programme d'essai procèdent à l'essai après cette étape préliminaire, cet essai consistant à :
   - débloquer le dispositif d'entraînement de manière à maintenir la tension du câble à la valeur spécifiée,
   - lancer la vibration du câble à la fréquence de vibration corrigée fr telle que :

$$fr = \sqrt{\frac{Tps}{Tmax}} \cdot fk\ réelle$$

   - corriger la position du dispositif d'entraînement de manière à maintenir la tension Tps.

## Claims

1. Vibration test bed for a cable enabling a cable to be subjected to vibration tests at a given frequency and in one or more chosen vibration modes; characterised in that the test bench includes means (2, 70, 20) for maintaining the tensile force on the cable constant throughout the vibration test in order to sustain the chosen vibration mode.

2. Vibration test bed according to Claim 1, characterised in that the maintaining means include means (7, 1, 3, 4) for measuring and regulating the tensile force imposed on the cable in order to correct any differences between this tensile force and a given tension value to be maintained.

3. Vibration test bed according to Claim 2, comprising a device for drawing the cable (37), the cable being tensioned between this device and a fixed clamp (81), characterised in that the measuring and regulating means include a force sensor (7) measuring the traction exerted on the cable by means of a rope (6) attached to the cable, means for controlling (90, 70) and means for moving (40, 1, 3, 4) the drawing device, the control means being suitable for bringing about movements of the drawing devices in order to obtain an adjustment of the tension exerted to the given value.

4. Vibration test bed according to Claim 3, characterised in that the movement means include runners (4) on which the drawing device is placed, a geared motor (1) coupled to a screw (3) bringing about the movement of the drawing device on these runners in accordance with an instruction received from the control means.

5. Vibration test bed according to any one of the preceding claims, characterised in that the cable is connected to the drawing device by means of an oscillating arm (8) moved by the device.

6. Test bed according to Claim 5, characterised in that the connection between the cable and the arm is effected by a tapered gripper (32) located at a vibration node of the cable.

7. Vibration test bed according to Claim 5, characterised in that the drawing device includes an electropneumatic system comprising an articulated head (31) able to move the arm in any required oscillation plane.

8. Vibration test bed according to Claim 7, characterised in that the electropneumatic system includes a shaft (42) supporting the articulated head (31) coupled to means (19) for driving this shaft in rotation.

9. Vibration test bed according to Claim 7 or 8, characterised in that the articulated head (31) has two jacks (10) and a proportional control valve (11) enabling the two jacks to be moved in alternation, these jacks being fixed to a first plate supporting the oscillating arm, which is itself mounted on the articulated head.

10. Vibration test bed according to Claim 8, characterised in that the means for driving in rotation (19) include a geared motor (19) driving the support arm by means of a pulley (18) and a transmission belt (41).

11. Vibration test bed according to any one of the preceding claims, characterised in that the control means include an electropneumatic control (70) controlling the device driving the oscillating arm, an automatic control device (90) for this electropneumatic control including a processing unit loaded with a test program, the unit being provided with an input/output peripheral (21) for receiving the intrinsic characteristics of the cable and the characteristics relating to the test.

12. Test bed according to Claim 11, characterised in that the processing means loaded with the test program make it possible, when the intrinsic characteristics of the cable and characteristics relating to the test are received, to carry out a preliminary step consisting of:
   - calculating the natural frequency of the cable for the vibration mode chosen as a function of a specified tension value Tps,
   - positioning the drawing device at a predetermined location on the runners in order to subject the cable to the specified tension,
   - sending a control signal to the electropneumatic control in order to act on the cable at the calculated natural vibration frequency and to cause the control signal to change so that the vibration frequency changes in progressive steps around the calculated natural frequency until the true natural frequency fk of the cable is obtained, this frequency being obtained for a dynamic tension Tmax.

13. Vibration test bed according to Claim 12, characterised in that the processing means loaded with the test program are suitable for determining the true natural frequency by measuring, during the preliminary step, the dynamic tension of the cable and seeking, amongst the measured values, the maximum value, the true natural frequency of the cable being obtained when there is equality between these two tension values.

14. Vibration test bed according to Claims 12 or 13, characterised in that the processing means loaded with the test program carry out the test after this preliminary step, this test consisting of:
   - releasing the drawing device so as to maintain the tension of the cable at the specified value,
   - initiating the vibration of the cable at the corrected vibration frequency fr such that:

$$fr = \sqrt{\frac{Tps}{Tmax}} \cdot true\ fk$$

   - correcting the position of the drawing device so as to maintain the tension Tps.

EP 0 614 076 B1

**Patentansprüche**

1. Vibrations- bzw. Schwingungsprüfstand für Kabel, um Kabel Schwingungsversuchen zu unterziehen, mit einer festgelegten Frequenz und entsprechend einer oder mehreren gewählten Schwingungsarten;
   **dadurch gekennzeichnet**,
   daß der Prüfstand Einrichtungen (2,70,20) zur Aufrechterhaltung einer konstanten Zugspannung auf die Kabel während der Dauer des Schwingungsversuchs umfaßt, um die gewählte Schwingungsart aufrechtzuerhalten.

2. Schwingungsprüfstand nach Anspruch 1, dadurch gekennzeichnet, daß die Aufrechterhaltungseinrichtungen Meß- und Regelungseinrichtungen (7, 1, 3, 4) der Zugspannung umfassen, der die Kabel ausgesetzt sind, um die Abweichungen dieser Zugspannung von einem festgelegten, aufrechtzuerhaltenden Spannungswert zu korrigieren.

3. Schwingungsprüfstand nach Anspruch 2, eine Kabelbewegungsvorrichtung (37) umfassend, wobei das Kabel gespannt wird zwischen dieser Vorrichtung und einer feststehenden Halterung (81), dadurch gekennzeichnet, daß die Meß- und Regelungseinrichtungen einen Meßwertgeber (7) umfassen, der mittels einer am Kabel angebrachten Umhüllung (6) die auf das Kabel ausgeübt Zugspannung mißt, Steuereinrichtungen (90, 70) und Verschiebungseinrichtungen (40, 1, 3, 4) der Kabelbewegungsvorrichtung, wobei die Steuereinrichtungen Verschiebungen der Bewegungsvorrichtung bewirken können, um eine Regelung der ausgeübten Spannung auf den festgelegten Wert zu erhalten.

4. Schwingungsprüfstand nach Anspruch 3, dadurch gekennzeichnet, daß die Verschiebungseinrichtungen Gleitschienen (4) umfassen, auf denen die Bewegungsvorrichtung angeordnet ist: ein Getriebemotor (1), an eine Schraube (3) gekuppelt, die die Verschiebung der Bewegungsvorrichtung auf den Gleitschienen entsprechend einem von den Steuereinrichtungen erhaltenen Sollwert bewirkt.

5. Schwingungsprüfstand nach einem der vorhergehenden Ansprüche, dadurch gekennzeichnet, daß das Kabel mit der Bewegungsvorrichtung verbunden ist mittels eines Schwingarms (8), bewegt durch die Vorrichtung.

6. Schwingungsprüfstand nach Anspruch 5, dadurch gekennzeichnet, daß die Verbindung zwischen dem Kabel und dem Arm hergestellt wird durch eine konische Zange (32), angeordnet auf einem Schwingungsknotenpunkt des Kabels.

7. Schwingungsprüfstand nach Anspruch 5, dadurch gekennzeichnet, daß die Bewegungsvorrichtung ein elektropneumatisches System enthält, das einen Gelenkkopf (31) umfaßt, der den Arm in jede beliebige gewünschte Ebene bewegen kann.

8. Schwingungsprüfstand nach Anspruch 7, dadurch gekennzeichnet, daß das elektropneumatische System eine Trägerwelle (42) des Gelenkkopfs (31) umfaßt, gekuppelt mit Drehantriebseinrichtungen (19) dieser Welle.

9. Schwingungsprüfstand nach Anspruch 7 oder 8, dadurch gekennzeichnet, daß der Gelenkkopf (31) zwei Stellzylinder (10) und einen Proportionalverteiler (11) umfaßt, der die beiden Stellzylinder in Wechselbewegung versetzen kann, wobei diese Stellzylinder befestigt sind an einer ersten Platte, die den Schwingarm trägt, der seinerseits an dem Gelenkkopf befestigt ist.

10. Schwingungsprüfstand nach Anspruch 8, dadurch gekennzeichnet, daß die Drehantriebseinrichtungen (19) einen Getriebemotor (19) umfassen, der den Trägerarm mittels eine Riemenscheibe (18) und eines Transmissionsriemens (41) antreibt.

11. Schwingungsprüfstand nach einem der vorhergehenden Ansprüche, dadurch gekennzeichnet, daß die Steuereinrichtungen eine elektropneumatische Steuerung (70) umfassen, die die Bewegungsvorrichtung des Schwingarms steuert, ein automatisches Steuerorgan (90) dieser elektropneumatischen Steuerung, eine Verarbeitungseinheit umfassend, geladen mit einem Versuchsprogramm, wobei die Einheit versehen ist mit einer Eingangs-/Ausgangsperipherie (21), um die dem Kabel eigenen Charakteristika und die versuchsbedingten Charakteristika zu erhalten.

**12.** Schwingungsprüfstand nach Anspruch 11, dadurch gekennzeichnet, daß die mit dem Versuchprogramm geladenen Verarbeitungseinrichtungen nach dem Empfang der dem Kabel eigenen Charakteristika und der versuchsbedingten Charakteristika ermöglichen, einen vorausgehenden Verarbeitungsschritt vorzunehmen, bestehend im:

- Berechnen der Eigenfrequenz des Kabels für eine in Abhängigkeit von einem spezifischen Spannungswert Tps gewählte Schwingungsart,
- Positionieren der Bewegungsvorrichtung an einer auf den Gleitschienen festgelegten Stelle, um das Kabel der spezifischen Spannung auszusetzen,
- Senden eines Steuersignals an die elektropneumatische Steuerung, um das Kabel mit der berechneten Eigenschwingungsfrequenz zu beanspruchen und das Steuersignal sich so entwikkeln zu lassen, daß sich die Schwingungsfrequenz in progressiven Schritten um die berechnete Eigenfrequenz herum entwickelt, bis man die tatsächliche Eigenfrequenz fk reell des Kabels erhält, wobei diese Frequenz für eine dynamische Spannung Tmax erhalten wird.

**13.** Schwingungsprüfstand nach Anspruch 12, dadurch gekennzeichnet, daß die mit dem Versuchsprogramm geladenen Verarbeitungseinrichtungen die tatsächliche Eigenfrequenz bestimmen können durch Messen - während des vorausgehenden Schritts - der dynamischen Spannung des Kabels und Suchen des Maximalwerts unter den gemessenen Werten, wobei man die tatsächliche Eigenfrequenz des Kabels erhält, wenn Gleichheit besteht zwischen diesen beiden Spannungswerten.

**14.** Schwingungsprüfstand nach einem der Ansprüche 12 oder 13, dadurch gekennzeichnet, daß die mit dem Versuchsprogramm geladenen Verarbeitungseinheiten nach diesem vorausgehenden Schritt den Versuch durchführen, wobei dieser Versuch darin besteht:

- die Bewegungsvorrichtung zu entblockieren, um die Kabelspannung auf dem spezifischen Wert zu halten,
- die Kabelschwingung auf die korrigierte Schwingungsfrequenz fr zu bringen, wie z.B.:

$$fr = \sqrt{\frac{Tps}{Tmax}} \cdot fk \text{ réelle}$$

- die Position der Bewegungsvorrichtung zu korrigieren, um die Spannung Tps aufrechtzuerhalten.

FIG.1

FIG. 4

EP 0 614 076 B1

FIG. 2

FIG. 3

FIG. 5

| | |
|---|---|
| POSITIONNER LE CAISSON<br>CABLE NON TENDU<br>(BUTEE AVANT DU CAISSON) | *1* |

↓

| | |
|---|---|
| DEROULER LE CABLE A<br>TESTER ET FIXER LE CABLE<br>SUR BLOCS 40, 60,80. | *II* |

↓

| | |
|---|---|
| SAISIR AU CLAVIER<br>LES CARACTERISTIQUES<br>INTRINSEQUES DU CABLE<br>ET LA TENSION DE POSE<br>SPECIFIEE : Tps | *III* |

↓

| | |
|---|---|
| CALCULER LA FREQUENCE<br>PROPRE Fo POUR No EN<br>FONCTION DE Tps. | *IV* |

↓

| | |
|---|---|
| POSITIONNER LE CAISSON<br>POUR TENDRE LE CABLE<br>A LA TENSION =Tps. | *V* |

↓

| | |
|---|---|
| BLOQUER LE CAISSON A<br>LA POSITION TENSION CABLE<br>= Tps. | *VI* |

↓

| | |
|---|---|
| VIBRER LE CABLE<br>AUTOUR DE Fo CAISSON FIXE.<br>EXPLORATION DE LA PLAGE<br>DE FREQUENCE TELLE QUE : Fo $\pm$ K$\Delta$F | *VII* |

↓

| | |
|---|---|
| MESURER LA TENSION DYNAMIQUE<br>PENDANT LA PHASE EXPLORATION. | *VIII* |

↓

| | |
|---|---|
| FREQUENCE REELLE OBTENUE<br>(POUR LE MODE No CHOISI)<br>POUR LA VALEUR MAXIMALE<br>DE LA TENSION DYNAMIQUE<br>MESUREE Fk REELLE POUR Tmax. | *IX* |

↓

( FIG. 6 )

```
              NON    OUI

        ┌─────────────────────────────┐
        │   DEBLOQUER LE CAISSON       │
        │ MAINTENIR LA TENSION DU CABLE│
        │    =  Tps  =  CONSTANTE.     │ X
        └─────────────────────────────┘
```

DEBLOQUER LE CAISSON
MAINTENIR LA TENSION DU CABLE
= Tps = CONSTANTE.   *X*

LANCER LA VIBRATION DU CABLE
A LA FREQUENCE DE VIBRATION
CORRIGEE TELLE QUE :

Fk réelle = Fr

$$Fr = \sqrt{\dfrac{Tps}{Tmax}} \times \text{Fk réelle}$$

ET POUR MODE $N_0$ ET TENSION
CABLE = Tps =CONSTANTE   *XI*

CORRIGER LA POSITION
POUR MAINTENIR
TPS = CONSTANTE SUR LE CABLE.   *XII*

FIN D'ESSAI.   *XIII*

FIG. 6